# EUROPEAN PATENT APPLICATION

(11) **EP 4 765 000 A1**
(43) Date of publication of application: **24.06.2026**
(21) Application number: 25221321.0
(22) Date of filing: 08.12.2025
(51) Int. Cl.: G06Q 30/0601

(54) **ARTIFICIAL INTELLIGENCE DEVICE, OPERATING METHOD OF ARTIFICIAL INTELLIGENCE DEVICE AND NON-TRANSITORY STORAGE MEDIUM**

(30) Priority: 17.12.2024 KR 20240188525
(71) Applicant: LG Electronics Inc., Yeongdeungpo-gu Seoul 07336 (KR)
(72) Inventor: Kim, Kokeun, Seoul (KR); Cho, Jaeki, Seoul (KR); Park, Suchan, Seoul (KR); Lee, Seyeon, Seoul (KR); Bang, Yeonjun, Seoul (KR); Kim, Gayeong, Seoul (KR)
(74) Representative: Schott, Jakob Valentin

(57) **Abstract**

An artificial intelligence device according to an embodiment of the present disclosure may comprise a display; and at least one processor configured to: receive a model code identifying a product through a user input, if a search for the model code has been failed, obtain a first product search result based on a similarity between the model code and a pre-stored product model code, and display the obtained first product search result on the display.

## Description

### BACKGROUND OF THE INVENTION

### 1.Field of the Invention

The present invention relates to an artificial intelligence device, and more specifically, to the artificial intelligence device that provide a product search service.

### 2. Discussion of the Related Art

The search word suggestion service is a function that automatically suggests related search terms when the user starts entering a search term, or recommends the correct search term if the user searches by entering a typo or incorrect search term.

The search term suggestion service is mainly provided by search engines, shopping sites, and content platforms, and help users quickly and accurately find the information they want.

The existing search word suggestion service provides the function of recommending the correct word when Korean is incorrectly entered into English, when a typo is entered, when a spelling is incorrect, when searching for a synonym, or when the name or term before change is entered.

However, the existing search term suggestion service may only suggest general natural language search terms, and has a problem in that it does not work in specific domain, such as a model name that identify a specific product.

In addition, because the existing search word suggestion service uses a known Natural Language Processing (NLP) model, there is a problem that security issues exist regarding the search term entered by the user.

### SUMMARY OF THE INVENTION

The purpose of the present disclosure may be to effectively present a correct model code or a similar model code to the user.

The purpose of the present disclosure may be to improve a user's search experience and improve an accessibility to product.

The purpose of the present disclosure may be to enable users to easily search for products that suit their preference through an interactive commerce service.

The purpose of the present disclosure may be to easily search for products reflecting attributes even if only part of the model code is input.

An artificial intelligence device according to an embodiment of the present disclosure may comprise a display; and at least one processor configured to: receive a model code identifying a product through a user input, if a search for the model code has been failed, obtain a first product search result based on a similarity between the model code and a pre-stored product model code, and display the obtained first product search result on the display.

A method of operating an artificial intelligence device according to an embodiment of the present disclosure may receiving a model code identifying a product through a user input; if a search for the model code has been failed, obtaining a first product search result based on a similarity between the model code and a pre-stored product model code; and displaying the obtained first product search result

A computer-readable non-transitory storage medium on which a program for performing a method of operating an artificial intelligence device is recorded according to an embodiment of the present disclosure, wherein the method comprises receiving a model code identifying a product through a user input; if a search for the model code has been failed, obtaining a first product search result based on a similarity between the model code and a pre-stored product model code; and displaying the obtained first product search result.

According to an embodiment of the present disclosure, the problem of incorrect input of a model code may be solved without a complicated algorithm, and the user may be recommended a model that is functionally most similar to the input model code.

According to an embodiment of the present disclosure, it is possible to easily search for products that are functionally most similar to the desired product, thereby improving the experience in the product search and selection process.

According to an embodiment of the present disclosure, searched products are classified according to function, so a user may more quickly and accurately find a product with a desired specific function.

According to an embodiment of the present disclosure, a user may easily search for a product that matches the user's preference through an interactive commerce service, and products that are as similar as possible may be recommended even if the model code of the product is entered incorrectly.

According to an embodiment of the present disclosure, a user may easily search for a product reflecting desired attributes through a tag list and product image even if a user enters only part of the model code.

According to an embodiment of the present disclosure, a user may easily search for products reflecting desired attributes through a chatbot application even if a user inputs only part of the model code.

### BRIEF DESCRIPTION OF THE DRAWINGS

FIG. 1 is a block diagram for illustrating elements of an artificial intelligence device according to an embodiment of the present disclosure.
FIG. 2 is a diagram for illustrating the configuration of an artificial intelligence server according to an embodiment of the present disclosure.
FIG. 3 is a sequence diagram for explaining an operation method of an artificial intelligence system according to an embodiment of the present disclosure.
FIGS. 4 to 8 are diagrams illustrating a process of providing a first product search result including information on a product corresponding to a model code similar to the incorrectly entered model code when a model code is entered incorrectly according to an embodiment of the present disclosure.
FIGS. 9A to 9C are diagrams illustrating a process of providing product information of a product model code similar to the incorrectly entered model code when a model code is entered incorrectly according to an embodiment of the present disclosure.
FIGS. 10 and 11 are diagrams showing a process for obtaining second product search results according to an embodiment of the present disclosure.
FIGS. 12A to 12C are diagrams illustrating an example of providing second product search results in response to a search request for a model code correctly entered by a user, according to an embodiment of the present disclosure.
FIGS. 13A to 13L are diagrams illustrating a process for providing an interactive commerce service for product search according to an embodiment of the present disclosure.
FIGS. 14A and 14B are diagrams illustrating a process for determining detailed items of a product when only part of a model code is entered into a search window according to an embodiment of the present disclosure.
FIG. 15 is a diagram for explaining a method of operating an artificial intelligence device according to an embodiment of the present disclosure.

### DETAILED DESCRIPTION OF THE PREFERRED EMBODIMENTS

Artificial intelligence refers to the field of researching artificial intelligence or methodology to create it, and machine learning refers to the field of defining various problems dealt with in the field of artificial intelligence and researching methodology to solve them.

Machine learning is also defined as an algorithm that improves the performance of a task through consistent experience.

Artificial Neural Network (ANN) is a model used in machine learning, it may refer to an overall model with problem-solving capability that is composed of artificial neurons (nodes) that form a network through the combination of synapses.

Artificial neural network may be defined by connection pattern between neurons in different layers, a learning process that updates model parameter, and an activation function that generates output value.

An artificial neural network may include an input layer, an output layer, and optionally one or more hidden layers. Each layer may include one or more neurons, and the artificial neural network may include synapse connecting neurons. In an artificial neural network, each neuron may output the input signals input through the synapse, weight, and value of activation function for bias.

Model parameter refer to a parameter determined through learning and includes the weight of synapse connection and the bias of neurons. Hyperparameter refer to a parameter that must be set before learning in a machine learning algorithm and includes learning rate, number of repetition, mini-batch size, initialization function, etc.

The purpose of learning an artificial neural network may be seen as determining model parameter that minimize the loss function. The loss function may be used as an indicator to determine optimal model parameter during the learning process of an artificial neural network.

Machine learning may be classified into supervised learning, unsupervised learning, and reinforcement learning depending on the learning method.

Supervised learning refers to a method of training an artificial neural network with a label for the learning data given, a label may mean the correct answer (or result value) that the artificial neural network must infer when learning data is input to the artificial neural network.

Unsupervised learning may refer to a method of training an artificial neural network in a state where no label for training data is given.

Reinforcement learning may refer to a learning method in which an agent defined within an environment learns to select an action or action sequence that maximizes the cumulative reward in each state.

Among artificial neural networks, machine learning implemented with a deep neural network (DNN) that includes multiple hidden layers is also called deep learning, and deep learning is a part of machine learning.

Hereinafter, machine learning is used to include deep learning.

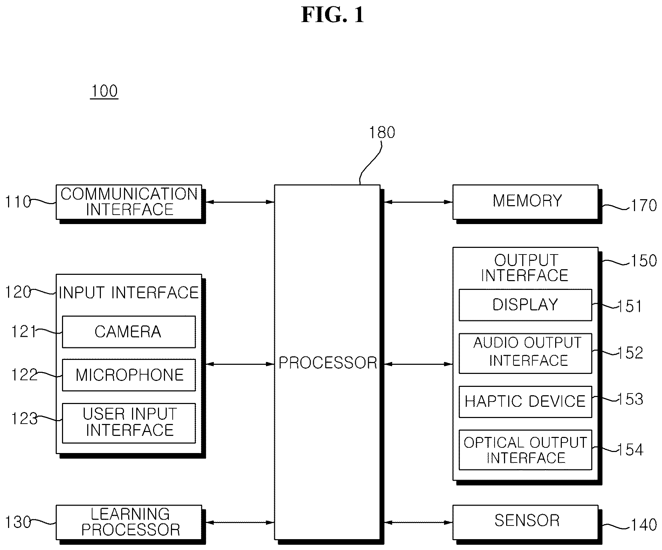

FIG. 1 is a block diagram for illustrating elements of an artificial intelligence device according to an embodiment of the present disclosure.

The artificial intelligence device 100 may be implemented as a fixed or movable device such as a TV, a projector, a mobile phone, a smartphone, a desktop computer, a laptop, a digital broadcasting terminal, a PDA (personal digital assistant), a PMP (portable multimedia player), a navigation, a tablet PC, a wearable device, and a set-top boxe(STB), a DMB receiver, a radio, a washing machine, a refrigerator, a desktop computer, a digital signage, a robot, a vehicle, etc.

Referring to FIG. 1, the artificial intelligence device 100 may include a communication interface 110, an input interface 120, a learning processor 130, a sensor 140, an output interface 150, a memory 170, and a processor 180.

The communication interface 110 may transmit and receive data with external device such as other artificial intelligence device or the AI server 200 using wired or wireless communication technology. For example, the communication interface 110 may transmit and receive sensor information, user input, learning model, and control signal with external device.

Communication technologies used by the communication interface 110 include Global System for Mobile communication (GSM), Code Division Multi Access (CDMA), Long Term Evolution (LTE), 5G, Wireless LAN (WLAN), and Wireless-Fidelity (Wi-Fi). , Bluetooth (Bluetooth), RFID (Radio Frequency Identification), Infrared Data Association (IrDA), ZigBee, NFC (Near Field Communication), etc.

The input interface 120 may acquire various types of data.

The input interface 120 may include a camera 121 for capturing image, a microphone 122 for receiving audio signals, and a user input interface 123 for receiving information from a user.

The camera 121 or the microphone 122 is treated as a sensor, and the signal obtained from the camera 121 or the microphone 122 may be called sensing data or sensor information.

The input interface 120 may obtain training data for model learning and input data to be used when obtaining an output using the learning model. The input interface 120 may acquire unprocessed input data, and in this case, the processor 180 or the learning processor 130 may extract input feature by preprocessing the input data.

The camera 121 processes image frame such as still image or moving image obtained by an image sensor in video call mode or photographing mode. Processed image frame may be displayed on display 151 or stored in memory 170.

The microphone 122 processes external acoustic signal into electrical voice data. The processed voice data may be utilized in various ways depending on the function (or application being executed) being performed by the artificial intelligence device 100. Meanwhile, various noise removal algorithms may be applied to the microphone 122 to remove noise generated in the process of receiving an external acoustic signal.

The user input interface 123 is for receiving information from the user, when information is input through the user input interface 123, the processor 180 may control the operation of the artificial intelligence device 100 to correspond to the input information.

The user input interface 123 is a mechanical input means (or mechanical key, for example, a button, dome switch, jog wheel, or jog switch located on the front/rear or side of the artificial intelligence device 100). etc.) and a touch input means.

As an example, the touch input may consist of a virtual key, soft key, or visual key displayed on the touch screen through software processing, or a touch key placed in a part other than the touch screen.

The learning processor 130 may train a model composed of an artificial neural network using training data. The learned artificial neural network may be referred to as a learning model. A learning model may be used to infer a result value for new input data other than learning data, and the inferred value may be used as the basis for a decision to perform an operation.

The learning processor 130 may perform AI processing together with the learning processor 240 of the AI server 200.

The learning processor 130 may include memory integrated or implemented in artificial intelligence device 100. The learning processor 130 may be implemented using the memory 170, an external memory directly coupled to the artificial intelligence device 100, or a memory maintained in an external device.

The sensor 140 may obtain at least one of internal information of the artificial intelligence device 100, information on the surrounding environment of the artificial intelligence device 100, or user information using various sensors.

The sensor 140 may include at least one of a proximity sensor, an illumination sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar sensor, or a radar sensor.

The output interface 150 may generate output related to vision, hearing, or tactile sensation.

The output interface 150 may include a display 151 that outputs an image, an audio output interface 152 that outputs audio, a haptic device 153 that outputs tactile information, and an optical output interface 154 that outputs light.

The display 151 displays (outputs) information processed by the artificial intelligence device 100. For example, the display 151 may display execution screen information of an application running on the artificial intelligence device 100, or user interface (UI) and graphic user interface (GUI) information according to the execution screen information.

The display 151 may be implemented as a touch screen by forming a mutual layer structure or being integrated with the touch sensor. The touch screen functions as a user input interface 123 that provides an input interface between the artificial intelligence device 100 and the user, and may simultaneously provide an output interface between the artificial intelligence device 100 and the user.

The audio output interface 152 may output audio data received from the communication interface 110 or stored in the memory 170 in call signal reception, call mode or recording mode, voice recognition mode, broadcast reception mode, etc.

The audio output interface 152 may include at least one of a receiver, a speaker, or a buzzer.

The haptic device 153 generates various tactile effects that the user may feel. A representative example of a tactile effect generated by the haptic device 153 may be vibration.

The light output interface 154 uses light from the light source of the artificial intelligence device 100 to output a signal to notify that an event has occurred. Examples of events that occur in the artificial intelligence device 100 may include receiving a message, receiving a call signal, a missed call, an alarm, a schedule notification, receiving an email, receiving information through an application, etc.

The memory 170 may store data supporting various functions of the artificial intelligence device 100. For example, the memory 170 may store input data obtained from the input interface 120, learning data, learning model, learning history, etc.

The processor 180 may determine at least one executable operation of the artificial intelligence device 100 based on information determined or generated using a data analysis algorithm or a machine learning algorithm.

The processor 180 may control the elements of the artificial intelligence device 100 to perform the determined operation.

To this end, the processor 180 may request, search, receive, or utilize data from the learning processor 130 or the memory 170, and may control elements of the artificial intelligence device 100 to be performed an operation that is predicted or an operation that is determined to be desirable among the at least one executable operation.

If linkage with an external device is necessary to perform a determined operation, the processor 180 may generate a control signal to control the external device and transmit the generated control signal to the external device.

The processor 180 may obtain intent information for user input and determine the user's request based on the obtained intent information.

The processor 180 may obtain intent information corresponding to the user input using at least one of a STT (Speech To Text) engine for converting voice input into a character string or a Natural Language Processing (NLP) engine for acquiring intent information of natural language.

At least one of the STT engine and the NLP engine may be composed of at least a portion of an artificial neural network learned according to a machine learning algorithm. And, at least one of the STT engine or the NLP engine may be learned by the learning processor 130, learned by the learning processor 240 of the AI server 200, or learned by distributed processing thereof.

The processor 180 collects history information including the user's feedback on the operation of the artificial intelligence device 100 and stores it in the memory 170 or the learning processor 130 or the AI server 200, etc. May be transmitted to external devices. The collected historical information may be used to update the learning model.

The processor 180 may control at least some of the elements of the artificial intelligence device 100 to run an application program stored in the memory 170.

The processor 180 may operate two or more of the elements included in the artificial intelligence device 100 in combination with each other in order to run the application program.

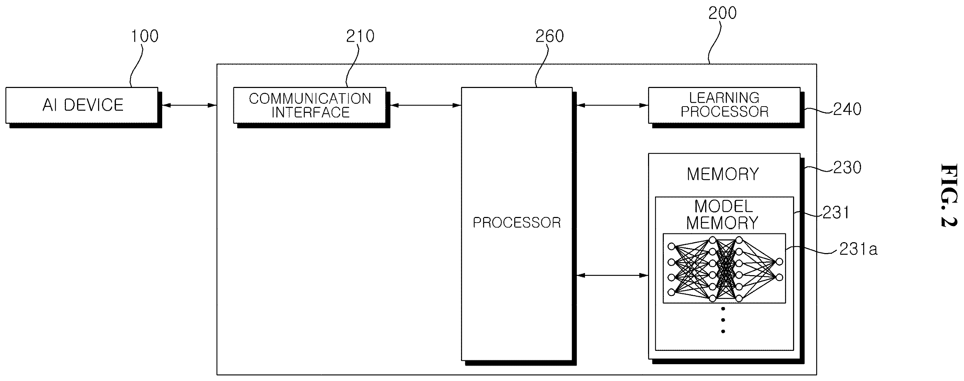

FIG. 2 is a diagram for illustrating the configuration of an artificial intelligence server according to an embodiment of the present disclosure.

Referring to FIG. 2, the AI server 200 may refer to a device that trains an artificial neural network using a machine learning algorithm or uses a learned artificial neural network.

The AI server 200 may be composed of a plurality of servers to perform distributed processing, and may be defined as a 5G network. The AI server 200 may be included as a part of the artificial intelligence device 100 and may perform at least part of the AI processing.

The AI server 200 may include a communication interface 210, a memory 230, a learning processor 240, and a processor 260.

The communication interface 210 may transmit and receive data with an external device such as the artificial intelligence device 100.

The memory 230 may include a model memory 231. The model memory 231 may store a model (or artificial neural network, 231a) that is being trained or has been learned through the learning processor 240.

The learning processor 240 may train the artificial neural network 231a using training data. The learning model may be used while mounted on the AI server 200 of the artificial neural network, or may be mounted and used on an external device such as the artificial intelligence device 100.

The learning model may be implemented in hardware, software, or a combination of hardware and software. When part or all of the learning model is implemented as software, one or more instructions constituting the learning model may be stored in the memory 230.

The processor 260 may infer a result value for new input data using a learning model and generate a response or control command based on the inferred result value.

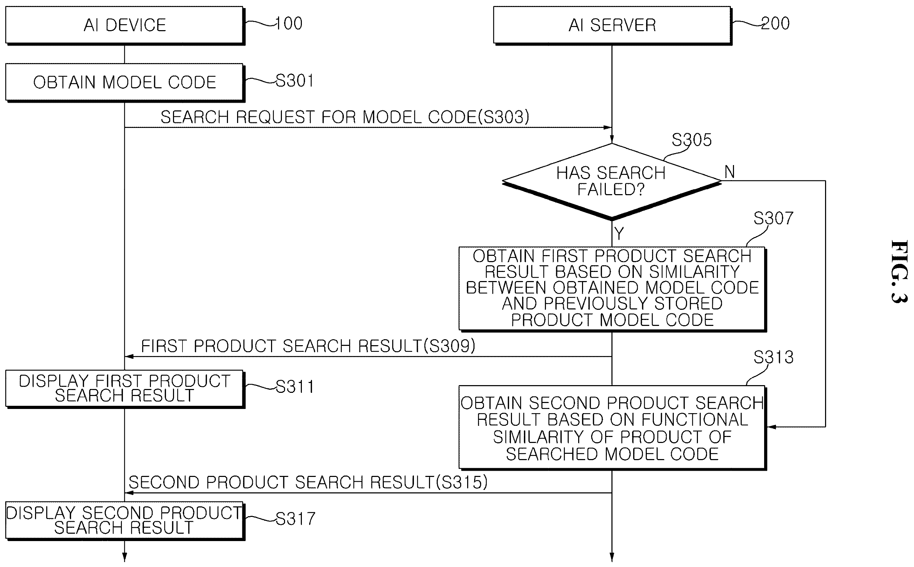

FIG. 3 is a sequence diagram for explaining an operation method of an artificial intelligence system according to an embodiment of the present disclosure.

The artificial intelligence system may include the artificial intelligence device 100 and the artificial intelligence server 200.

Hereinafter, the processor 180 may be comprised of a single processor or may be comprised of a plurality of processors.

Referring to FIG. 3, the processor 180 of the artificial intelligence device 100 may obtain a model code through a user input (S301).

The model code may be a code used to identify a product. The product may be a home appliance such as a refrigerator, a washing machine, an air purifier, or an air conditioner.

The model code may be a unique identifier string identifying the product. The model code may be referred to as a unique identifier string.

The user input may be either a keyboard input or a voice input.

In one embodiment, the processor 180 may receive the model code input through a search word input window included on a web page.

In another embodiment, the processor 180 may receive the model code input through an execution screen of a chatbot application. The artificial intelligence device 100 may provide an interactive commerce service. The conversational commerce service may be a service that allows users to explore products or make purchases through a messaging application, the chatbot applications, a voice assistant, etc.

The processor 180 may transmit a search request for the obtained model code to the artificial intelligence server 200 through the communication interface 110 (S303).

As an example, the processor 180 may obtain the user input of selecting a search button placed on one side of a search word input window included on a web page as a search request.

As another example, the processor 180 may obtain the search request through a user's voice command.

The processor 180 may include the model code entered in the search request and transmit it to the artificial intelligence server 200 through the communication interface 110.

The processor 260 of the AI server 200 may perform a search according to the received search request and determine whether a search for the model code has failed (S305).

In one embodiment, the processor 260 may determine that the search for the model code has failed if the obtained model code is not stored, and may determine that the search for the model code has succeeded if the obtained model code is stored.

If the model code received from the artificial intelligence device 100 is not stored in the memory 230, the AI server 200 may transmit a search failure notification indicating search failure to the artificial intelligence device 100. The processor 180 may determine that the search for the model code has failed according to the search failure notification received from the AI server 200.

If the model code received from the artificial intelligence device 100 is stored in the memory 230, the AI server 200 may transmit a search success notification indicating success of the search to the artificial intelligence device 100. The processor 180 may determine that the search for the model code was successful according to the search success notification received from the AI server 200.

If it is determined that the search for the acquired model code has failed, the processor 260 of the AI server 200 may obtain a first product search result based on a similarity between the obtained model code and a previously stored product model code (S307).

If it is determined that the obtained model code is not stored, the processor 260 may determine that the search code was entered incorrectly.

If it is determined that the search for the acquired model code has failed, the processor 260 may extract one or more product model codes similar to the acquired model code from among a plurality of stored product model codes, and obtain product information about one or more products identifying the extracted one or more product model codes as a first product search result.

The memory 230 may store the plurality of product model codes, a plurality of product embedding vectors matched to each of the plurality of product model codes, and a plurality of product information matched to each of the plurality of product model codes.

The processor 260 may convert the model code into an embedding vector and obtain a first product search result based on the similarity between the converted embedding vector and the previously stored product embedding vector. The processor 180 may extract one or more product embedding vectors from among a plurality of pre-stored product embedding vectors whose similarity to the converted embedding vector is equal to or greater than a certain similarity level.

The processor 260 may obtain one or more product information corresponding to one or more extracted product embedding vectors as the first product search result. The memory 230 of the artificial intelligence server 200 may be referred to as a database 230.

The first product search result may include product information about similar product with a model code similar to the model code entered incorrectly by the user.

The product information may include at least one of the product model name, a product name, a product manufacturer, a product capacity, a product power consumption, a product price, a product function, or a product purchase location.

The processor 260 of the AI server 200 may transmit the first product search result obtained through the communication interface 110 to the artificial intelligence device 100 (S309).

The processor 180 of the artificial intelligence device 100 may display the received first product search result on the display 151 (S311).

The processor 180 may receive the first product search result in response to a transmission request of a search request, and may display the received first product search result on the display 151 .

In another embodiment, the processor 180 may output the received first product search result as a voice through the audio output interface 152.

In another embodiment, the processor 180 may transmit the received first product search result to the user terminal.

Meanwhile, when the processor 260 of the AI server 200 determines that the search of the obtained model code is successful, the processor 260 may obtain a second product search result based on a functional similarity of the product of the searched model code (S313).

The processor 260 may generate a knowledge graph based on product specification information of the obtained model code. The product specification information may include a plurality of specification elements. Each of the plurality of specification elements may be an element representing a specification of a product.

For example, if the product is a stand-type display device, the plurality of specification elements may include a screen size, a speaker output, a speaker channel, a lineup, an installation type, and a resolution. The product specification information may vary depending on a type of product, and even if it is the same type, it may differ depending on the specification of the product.

The memory 230 may store the product specification information matched to the product model code and the knowledge graph matched to the product specification information.

The processor 260 may generate a unit embedding vector for each specification element of the product from the knowledge graph through the generated knowledge graph embedding model, and may generate a final embedding vector based on the generated unit embedding vectors.

The processor 260 may obtain product information corresponding to the final embedding vector as the second product search result. The second product search result may include product information about similar product that includes functions similar to those of the product matching the model code correctly entered by the user.

The second product search result may further include the product information of the model code correctly entered by the user.

The processor 260 of the AI server 200 may transmit the second product search result obtained through the communication interface 110 to the artificial intelligence device 100 (S315).

The processor 180 of the artificial intelligence device 100 may display the received second product search result on the display 151 (S317).

In another embodiment, the processor 180 may output the received second product search result as a voice through the audio output interface 152.

In another embodiment, the processor 180 may transmit the received second product search result to the user terminal.

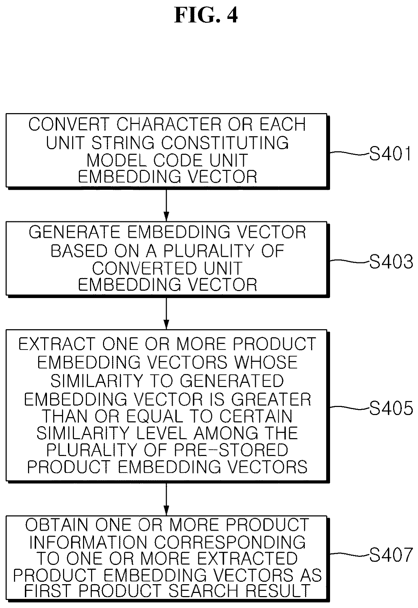

FIGS. 4 to 8 are diagrams illustrating a process of providing a first product search result including information on a product corresponding to a model code similar to the incorrectly entered model code when a model code is entered incorrectly according to an embodiment of the present disclosure.

FIG. 4 may be an embodiment that embodies step S307 of FIG. 3.

Each step in FIG. 4 is described as being performed by the processor 260 of the AI server 200, but may also be performed by the processor 180 of the artificial intelligence device 100.

Referring to FIG. 4, the processor 260 of the artificial intelligence server 200 may convert each of the characters or each unit string constituting the model code obtained through user input into a unit embedding vector (S401).

The model code may consist of a string to identify the product. The string may be composed of multiple characters or multiple unit strings.

A character may be the smallest unit of symbol in text. The character may be any of an alphabet, a number, or a special symbol.

The unit string may be a substring containing one or more characters sequentially from a given string. The unit string may represent a specific property of the model code.

The processor 260 may identify each of the characters or each of unit strings constituting the model code, convert each of the identified characters into a unit embedding vector, or convert each of the identified unit strings into a unit embedding vector.

The processor 260 may identify each of the characters or each of the unit strings constituting the received model code, convert each of the identified characters into a unit embedding vector, or convert each of the identified unit strings into a unit embedding vector.

The processor 260 of the artificial intelligence server 200 may generate an embedding vector based on a plurality of converted unit embedding vectors (S403).

The processor 260 may generate the embedding vector by adding the plurality of converted unit embedding vectors.

The processor 260 may apply a weight to one or more of the plurality of converted unit embedding vectors and generate the embedding vector based on the result of applying the weight.

In one embodiment, the processor 260 may additionally apply the weight to the unit embedding vector corresponding to the character or the unit string determined to be a typo, and may generate the embedding vector based on the result of additional application of the weight.

The processor 260 of the artificial intelligence server 200 may extract one or more product embedding vectors whose similarity to the generated embedding vector is greater than or equal to a certain similarity level among the plurality of pre-stored product embedding vectors (S405).

The processor 260 may measure the similarity between the generated embedding vector and the previously stored product embedding vector using a cosine similarity.

The cosine similarity may be an indicator that measures the directional similarity between two vectors.

The processor 260 may measure the similarity between the generated embedding vector and the plurality of product embedding vectors, and extract one or more product embedding vectors whose similarity between the two is greater than or equal to the certain similarity level.

The processor 260 of the artificial intelligence server 200 may obtain one or more product information corresponding to one or more extracted product embedding vectors as the first product search result (S407).

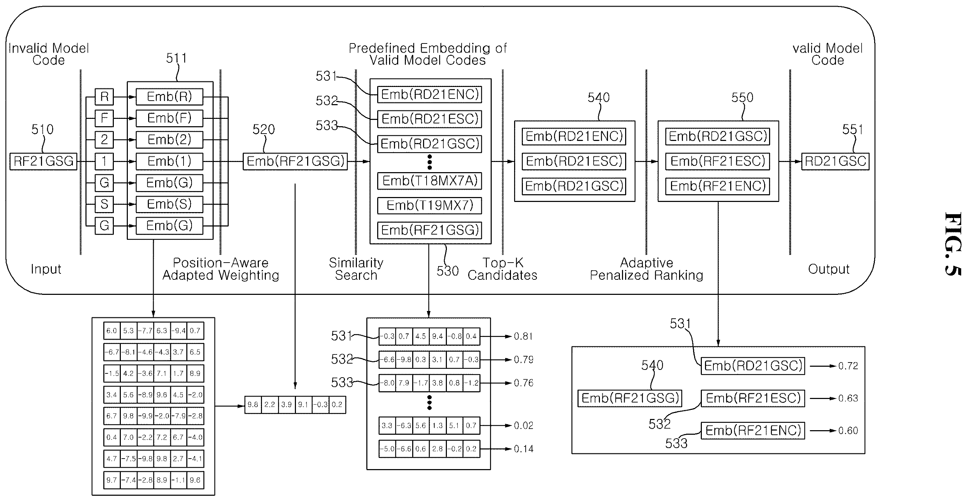

FIGS. 5 to 8 are diagrams showing a process for obtaining a valid model code when a user incorrectly inputs a model code according to an embodiment of the present disclosure.

FIGS. 5 to 8, it is assumed that the user enters a model code called <RF21GSG> into the search window displayed on the artificial intelligence device 100.

The artificial intelligence server 200 may determine whether <RF21GSG> is stored in the memory 230, and if <RF21GSG> is not stored in the memory 230, it may determine that <RF21GSG> is an incorrectly entered model code.

In FIGS. 5 to 8, <RF21GSG> is assumed to be an incorrectly entered model code.

Referring to FIG. 5 , the processor 260 may convert each of the plurality of unit characters of <RF21GSG, 510> into a plurality of unit embedding vectors 511 . Each unit embedding vector may be composed of a plurality of channels with a value.

The processor 260 may additionally apply a weight to the unit embedding vector at the position where the typo occurred in <RF21GSG> (Position-Aware Adapted Weighting). The processor 260 may generate a embedding vector 520 by adding unit embedding vectors according to a weight application result.

The processor 260 may measure the similarity between a plurality of product embedding vectors 530 stored in the memory 230 and the generated embedding vector 520 (Similarity Search). For example, the similarity between the embedding vector 520 and a first product embedding vector 531 may be 0.81, and the similarity between the embedding vector 520 and a second product embedding vector 532 may be 0.79.

Each of the plurality of product embedding vectors 530 may be matched to a plurality of valid model codes (product model codes).

The processor 260 may obtain a similar embedding vector list 540 including K product embedding vectors that are most similar to the embedding vector 520 based on the similarity measurement result (Top-K candidates). K is explained using 3 as an example, but this is only an example.

The processor 260 may determine the ranking of K product embedding vectors by adaptively applying a penalty (Adaptive Penalized Ranking). The processor 260 may impose the penalty on the K product embedding vectors based on a comparison result between the incorrectly entered model code 510 and the K product model codes, and determine a ranking according to the result of the penalty.

For example, the processor 260 may grant a greater penalty as the number of incorrectly entered characters increases, and may grant a smaller penalty as the number of incorrectly entered characters decreases.

Since there is a difference of two characters between the product model code of the first product embedding vector 531 and the input model code 510, the processor 260 may impose a penalty of -0.09 on the calculated similarity. Since there is a difference of 3 characters between the product model code of the second product embedding vector 532 and the input model code 510, the processor 260 may impose a penalty of -0.16 on the calculated similarity. Since there is a difference of 3 characters between the product model code of the third product embedding vector 533 and the input model code 510, the processor 260 may impose a penalty of -0.16 on the calculated similarity.

The processor 260 may obtain a ranking result 550 in which K product embedding vectors are arranged according to the determined ranking.

The processor 260 may obtain the highest priority valid model code (551, RD21GSC) as a final model code based on the determined ranking.

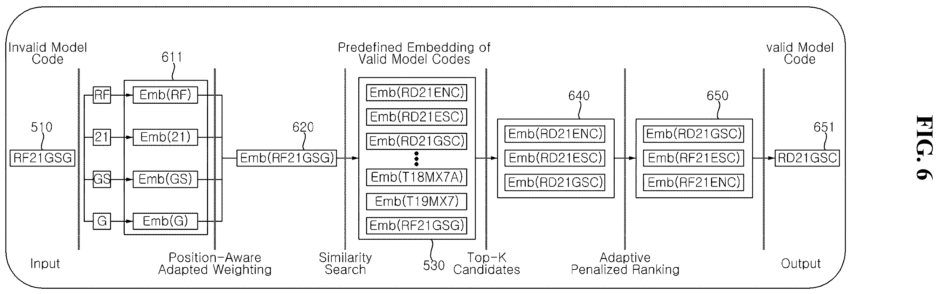

Referring to FIG. 6, the processor 260 may convert a plurality of unit strings of <RF21GSG, 510> into a plurality of unit embedding vectors 611. The model code may be composed of a unique identifier string, and the unique identifier string may include a plurality of unit strings. Each unit string may represent a product specification element.

The processor 260 may additionally apply the weight to the unit embedding vector at the position where the typo occurred in <RF21GSG> (Position-Aware Adapted Weighting). The processor 260 may generate an embedding vector 620 by adding unit embedding vectors according to the weight application result.

The processor 260 may measure the similarity between the plurality of product embedding vectors 530 stored in the memory 230 and the generated embedding vector 620 (Similarity Search). Each of the plurality of product embedding vectors 530 may be matched to a plurality of valid model codes.

The processor 260 may obtain a similar embedding vector list 640 including the three product embedding vectors most similar to the embedding vector 520 based on the similarity measurement result (Top-K candidates).

The processor 260 may determine the ranking of the three product embedding vectors by adaptively applying a penalty (Adaptive Penalized Ranking). The processor 260 may generate rankings for the three product embedding vectors by applying the penalty to a length difference and a typo pattern of the model code.

The processor 260 may obtain a ranking result 650 in which three product embedding vectors are arranged according to the determined ranking.

The processor 260 may obtain a highest priority valid model code 651 (RD21GSC) as the final model code based on the determined ranking.

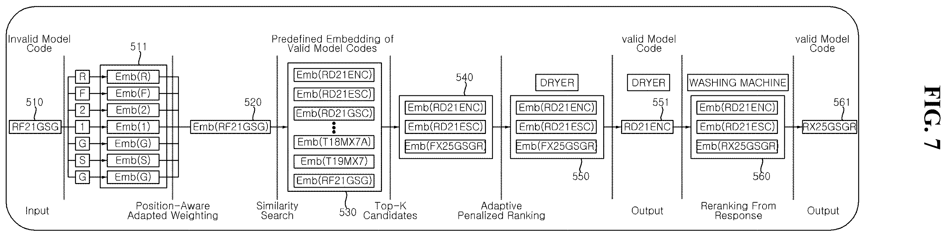

FIG. 7 is similar to FIG. 5, but additionally provides the most similar model code 551 among the three product embedding vectors ranked according to Adaptive Penalized Ranking) and a category (dryer) of the model code 551.

That is, the processor 260 may generate the first product search result including product information of the model code 551 and the category of the product, and transmit the generated first product search result to the artificial intelligence device 100.

The artificial intelligence device 100 may display the first product search result including product information and the category of the product. If it is not the desired the category of the product, the user may input a desired product category (washing machine) into the artificial intelligence device 100.

The artificial intelligence device 100 may transmit the category of the product desired by the user to the artificial intelligence server 200. The artificial intelligence server 200 may re-determine the ranking of the three product embedding vectors included in the ranking result 550 based on the category of the received product (Re-ranking From Response).

The artificial intelligence server 200 may obtain a re-ranking result 560 according to the re-determination, and obtain a model code (RX25GSGR, 561) corresponding to the category of the washing machine among the three product embedding vectors as the final model code.

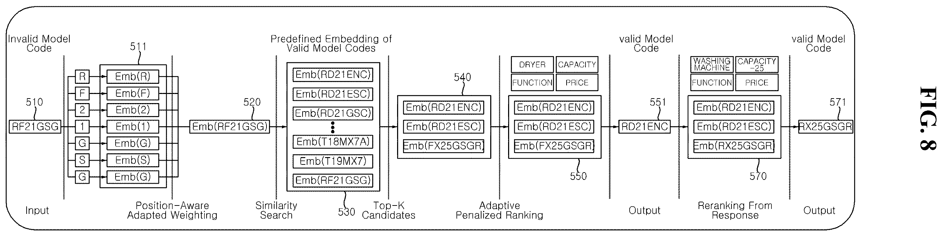

FIG. 8 is similar to FIG. 5, but is a diagram that additionally provides the most similar model code 551 among the three product embedding vectors ranked according to Adaptive Penalized Ranking, the category (dryer) of the model code 551, and specification elements (capacity, function, price) of the model code 551.

That is, the processor 260 may generate the first product search result including the product information of the model code 551, the category of the product, and specification elements, and transmit the generated first product search result to the artificial intelligence device 100.

The artificial intelligence device 100 may display the first product search result including the product information, the category of the product, and specification elements. If the user is not the category and the specification element of the desired product, the user may input the category (washing machine) and the specification element of the desired product into the artificial intelligence device 100.

The artificial intelligence device 100 may transmit the category and specification element of the product desired by the user to the artificial intelligence server 200. The artificial intelligence server 200 may re-determine the ranking of the three product embedding vectors included in the ranking result 550 based on the category and the specification element of the received product (Reranking From Response).

The artificial intelligence server 200 may obtain a re-ranking result 570 according to the re-determination, and obtain a model code (RX25GSGR, 571) corresponding to the category of the washing machine among the three product embedding vectors as the final model code.

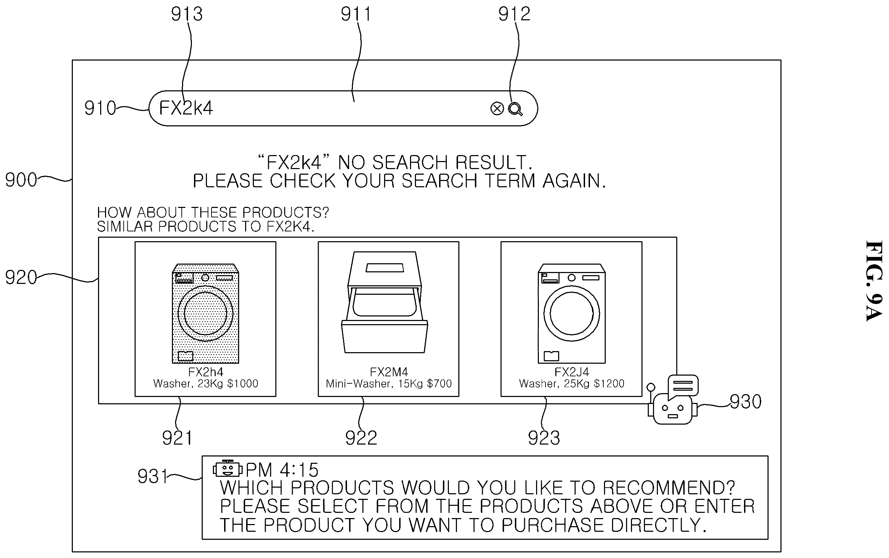

FIGS. 9A to 9C are diagrams illustrating a process of providing product information of a product model code similar to the incorrectly entered model code when a model code is entered incorrectly according to an embodiment of the present disclosure.

FIGS. 9A to 9C, the artificial intelligence device 100 may display a web page 900 on the display 151. The web page 900 may be a page for providing a product search service.

The web page 900 may include a search window 910 including an input bar 911 and a search button 912. A model code 913 entered by the user may be displayed on the input bar 911.

After the model code 913 is displayed on the input bar 911, the artificial intelligence device 100 may transmit a search request for the model code 913 to the artificial intelligence server 200 according to a command for selecting the search button 912.

If the search for the model code 913 fails in response to the search request, the artificial intelligence server 200 may transmit the first product search result including one or more product information matched to one or more product model codes similar to the model code 913 to the artificial intelligence device 100.

The artificial intelligence device 100 may display a first product search result 920 including a text indicating failure of product search for the model code 913 and product information of a product model code similar to the model code 913 on a first area of the web page 900. The first product search result 920 may include a plurality of product items 921, 922, and 923.

Each product item may include product information having a product model code similar to the model code 913 that the user entered incorrectly.

Each product item may include at least one of a valid product model code, a product name, a product capacity, or a product price.

The artificial intelligence device 100 may further display a chatbot icon 930 on the web page 900. The chatbot icon 930 may be an icon for executing a chatbot application to guide a search, a selection, or a purchase of a product.

The artificial intelligence device 100 may display a chatbot screen 931 for guiding product search on the web page 900 according to the selection of the chatbot icon 930.

In this way, according to the embodiment of the present disclosure, the problem of incorrect input of model code may be solved without a complicated algorithm, and the user may be recommended a model that is functionally most similar to the input model code.

Accordingly, the user may easily find the desired product even if the user cannot remember the exact model code or make a typo, greatly improving the user's search experience.

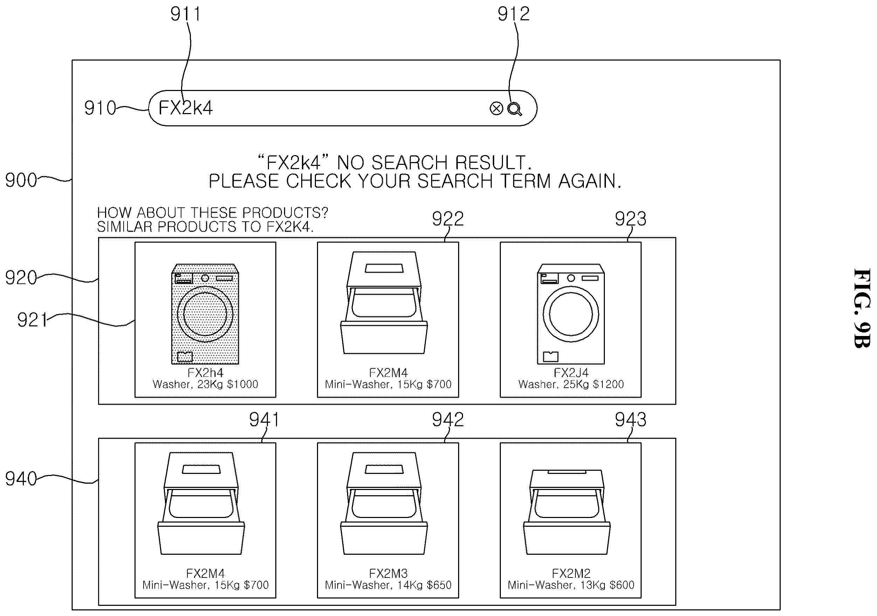

The artificial intelligence device 100, as shown in FIG. 9B, may display a product search classification result 940 based on the selected product item on a second area of the web page 900 according to a command to select the product item 922 included in the first product search result 920. The second area may be located at the bottom of the first area, but this is only an example.

The product search classification result 940 may include a plurality of product items added or rearranged based on a attribute or a category of the selected product item.

The artificial intelligence device 100 may display the product search classification result 940 based on the category of the second product item 922 selected according to a command to select the second product item 922 among the first to third product items 921, 922, and 923 included in the first product search result 920 displayed on the first area.

When the category of the second product item 922 is a mini washer, the product search classification result 940 may include a plurality of mini washer items 941, 942, and 943 for a plurality of mini washers.

As such, according to an embodiment of the present disclosure, it is possible to easily search for products that are functionally most similar to the desired product, thereby improving the experience in the product search and selection process.

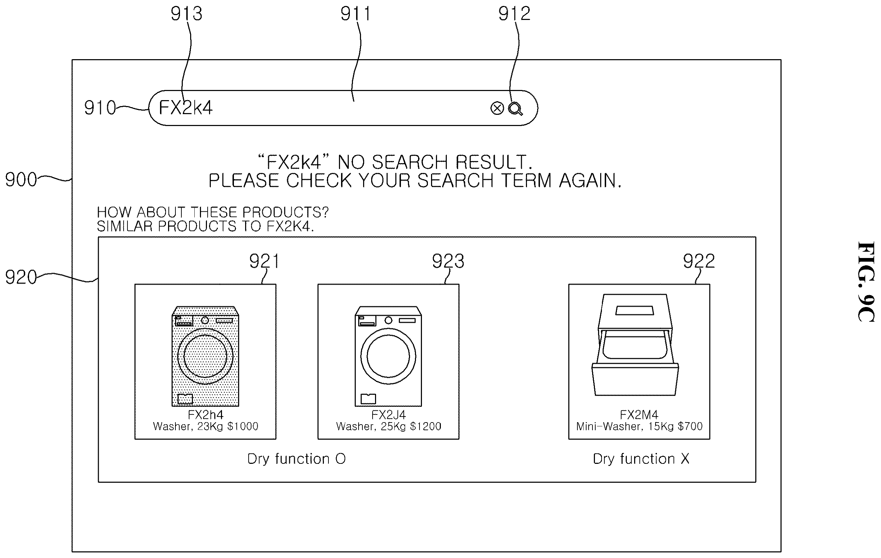

Meanwhile, as shown in FIG. 9C, the first to third product items 921, 922, and 923 included in the first product search result 920 may be classified and displayed according to a attribute, a category, or whether a specific function is supported.

For example, assume that the first to third product items 921, 922, and 923 are washing machine items, the first product item 921 and the third product item 923 provide a drying function, and the second product item 922 does not provide the drying function.

The artificial intelligence device 100 may display the first product item 921 and the third product item 923 that provide the drying function on an area distinct from the second product item 922.

As such, according to an embodiment of the present disclosure, when searched products are classified according to a function, the user may more quickly and accurately find a product with a desired specific function.

Again, FIG. 3 will be described.

When the processor 260 of the AI server 200 determines that the search of the obtained model code is successful, it may obtain a second product search result based on the functional similarity to the product of the obtained model code (S313).

If it is determined that the obtained model code is stored, the processor 260 may determine that the search code has been entered correctly.

If it is determined that the search of the obtained model code is successful, the processor 260 may obtain product information of one or more products that are functionally similar to the product of the model code as the second product search result.

The processor 260 of the AI server 200 may transmit the second product search result obtained through the communication interface 110 to the artificial intelligence device 100 (S315).

The processor 180 of the artificial intelligence device 100 may display the received second product search result on the display 151 (S317).

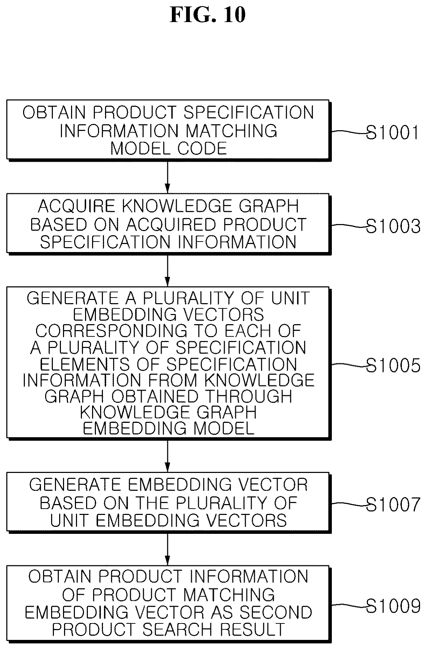

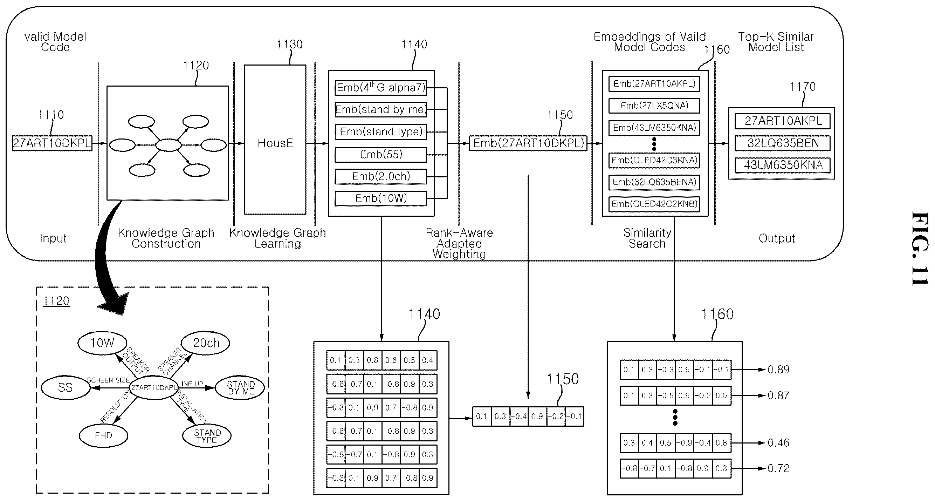

FIGS. 10 and 11 are diagrams showing a process for obtaining second product search results according to an embodiment of the present disclosure.

Referring to FIG. 10, the processor 260 of the artificial intelligence server 200 may obtain product specification information matching the model code (S1001).

The memory 230 of the artificial intelligence server 200 may store a model code and product specification information matching the model code. The product specification information may include multiple specification elements.

Referring to FIG. 11, it is assumed that the user enters the correct model code of <27ART10DKPL, 1110>.

The processor 260 may acquire a knowledge graph based on the acquired product specification information (S1003).

The knowledge graph may be a graph that structurally expresses a plurality of specification elements of a product.

The processor 260 may construct a knowledge graph 1120 based on product specification information matching the model code 1110 (Knowledge Graph Construction). The knowledge graph 1120 may be composed of a plurality of nodes and edges connecting the plurality of nodes.

A central node of the knowledge graph 1120 may be a model code, and a sub-node may be a value of each specification element. An edge connecting the central node and the sub-node may represent a relationship between the central node and the sub-node. The edge may correspond to the specification element.

The processor 260 may generate a plurality of unit embedding vectors corresponding to each of a plurality of specification elements of specification information from the knowledge graph obtained through a knowledge graph embedding model (S1005).

The knowledge graph embedding model may be a model for outputting an embedding vector from the knowledge graph. The knowledge graph embedding model may be a HousE (HouseEmbedding) model 1130.

The HouseE model 1130 may be a model for expressing a hierarchical structure and order information of the knowledge graph.

The processor 260 may generate a plurality of unit embedding vectors 1140 by converting each of the plurality of sub-nodes of the knowledge graph into an embedding space through the HousE model 1130 (Knowledge Graph Learning).

The processor 260 may generate an embedding vector based on the plurality of unit embedding vectors (S1007).

The processor 260 may calculate a weighted sum by considering the importance of each of the plurality of unit embedding vectors 1140, and obtain the calculated weighted sum as a embedding vector 1150.

The processor 260 may additionally apply a weight to one or more of the plurality of unit embedding vectors and generate the embedding vector 1150 based on the result of applying the weight. The processor 260 may assign a rank to each of a plurality of specification elements and assign a large weight to the unit embedding vector corresponding to the specification element of a high rank (Rank-Aware Adapted Weighting).

The processor 260 may assign the high rank to one or more of the plurality of specification elements based on user preference information. The user preference information may be a preference specification element created based on a user's past purchase history. The user preference information may be previously stored in the memory 230.

The processor 260 may calculate the similarity between the generated embedding vector 1150 and a plurality of product embedding vectors 1160 stored in the memory 230. The processor 260 may obtain K product embedding vectors 1170 that are most similar to the embedding vector 1150 according to the similarity calculation result. K may be 3, but this is just an example.

The processor 260 may obtain product information of the product matching the embedding vector as the second product search result (S1009).

The processor 260 may extract product information matching each of the plurality of product embedding vectors 1170 from the memory 230 and obtain the extracted product information as the second product search result.

The second product search result may include product information of one or more products that are functionally similar to the product whose model code was correctly entered by the user.

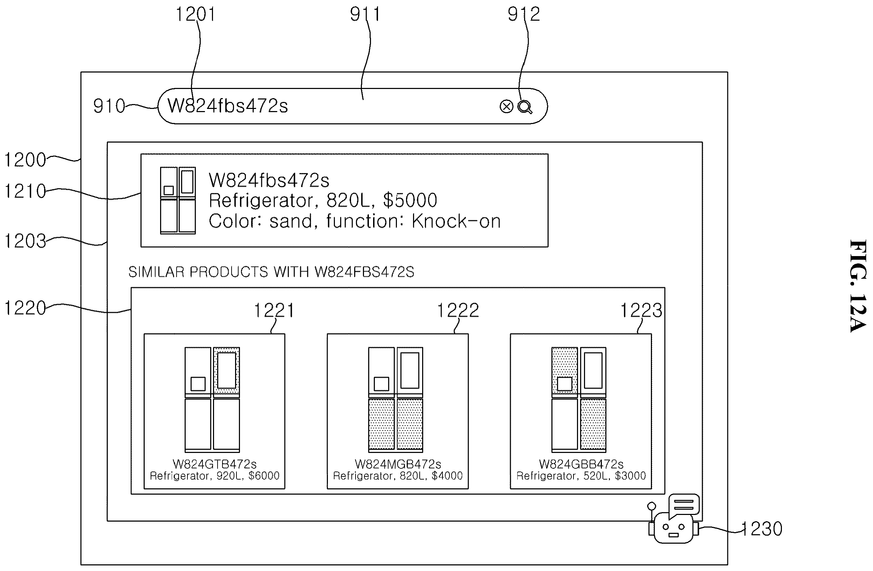

FIGS. 12A to 12C are diagrams illustrating an example of providing second product search results in response to a search request for a model code correctly entered by a user, according to an embodiment of the present disclosure.

FIGS. 12A to 12C, the artificial intelligence device 100 may display a web page 1200 on the display 151. The web page 1200 may be a page for providing a product search service.

The web page 1200 may include the search window 910 including the input bar 911 and the search button 912. A model code 1201 entered by the user may be displayed on the input bar 911.

After the model code 1201 is displayed on the input bar 911, the artificial intelligence device 100 may transmit a search request for the model code 1201 to the artificial intelligence server 200 according to a command for selecting the search button 912.

If the search for the model code 1201 is successful in response to the search request, the artificial intelligence server 200 may transmit, to the artificial intelligence device 100, the second product search result including product information matching the model code 1201 and one or more product information matching one or more product model codes similar to the model code 1201.

The artificial intelligence device 100 may display, on the web page 900, the second product search result 1203 including a basic product search result 1210 including product information of a product matching the model code 1201 and a similar product search result 1220 including product information of one or more product model codes similar to the model code 1201. The similar product search result 1220 may include a plurality of similar product items 1221, 1222, and 1223.

Each product item may include product information of a product model code similar to model code 1201 entered by the user.

Each product item may include at least one of a valid product model code, a product name, a product capacity, or a product price.

The artificial intelligence device 100 may further display a chatbot icon 1230 on the web page 1200. The chatbot icon 1230 may be an icon for executing a chatbot application to a guide search, a selection, or a purchase of a product.

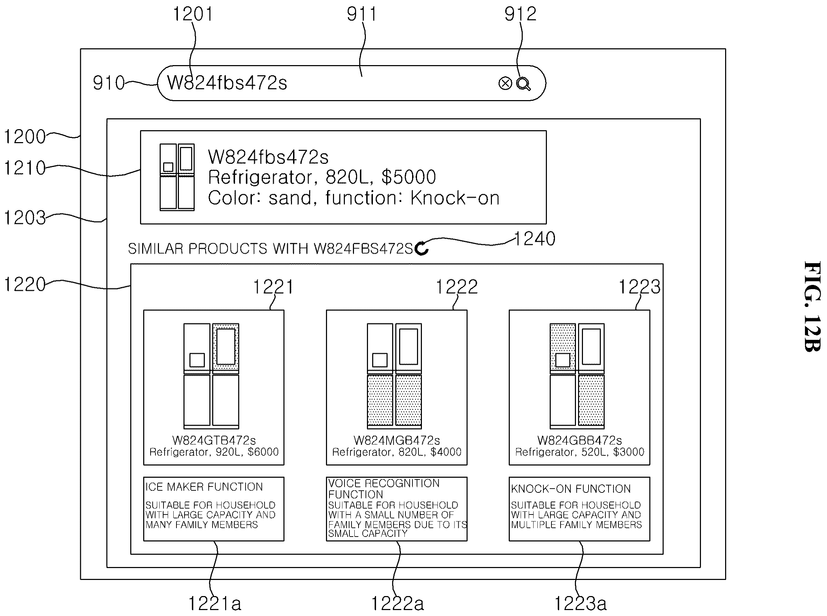

Referring to FIG. 12B, the artificial intelligence device 100 may additionally provide function summary information to the similar product search result 1220. The similar product search result 1220 may include function summary information to explain the difference between a function of the product matching the model code and a function of the similar product.

For example, the artificial intelligence device 100 may display a first function summary information 1221a on one side of the first product item 1221, a second function summary information 1222a on one side of the second product item 1222, and a third function summary information 1223a on one side of the third product item 1223.

Each of the first function summary information 1221a, the second function summary information 1222a, and the third function summary information 1223a may include a summary of the functions of each product item.

Each of the first function summary information 1221a, the second function summary information 1222a, and the third function summary information 1223a may include a content of functions compared with other products. The other product may be a product corresponding to the correctly entered model code or a similar product.

In one embodiment, the artificial intelligence device 100 may generate the function summary information from product information of each product item through a large language model (LLM). The large language model may be stored in memory 170.

In another embodiment, the artificial intelligence server 200 may generate the function summary information from the product information of each product item through the large language model, and transmit the second product search result 1203 and the function summary information to the artificial intelligence device 100.

The user may easily check information about the product through function summary information.

Meanwhile, a refresh button 1240 may be further displayed on the web page 1200. The refresh button 1240 may be a button for providing the function summary information of each product item in a new expression. The LLM may be used in this process.

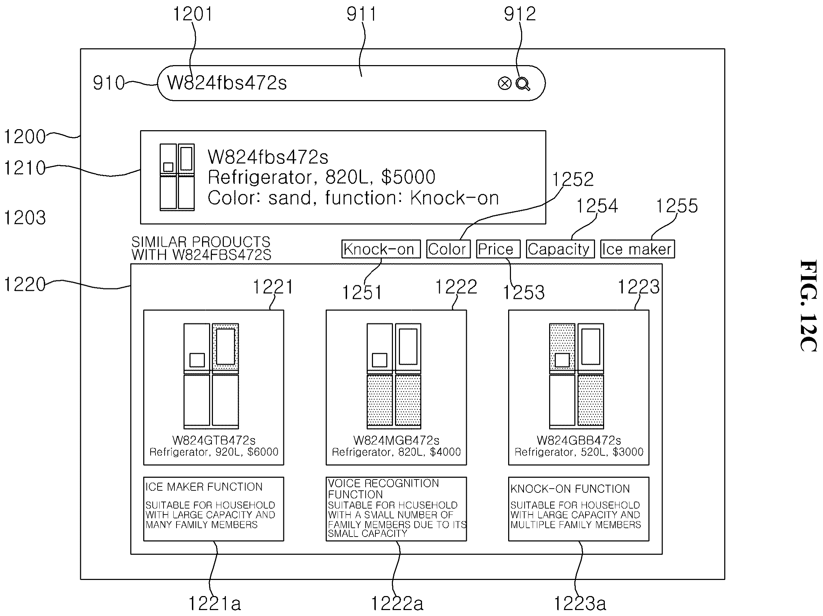

Referring to FIG. 12C, the artificial intelligence device 100 may further display a plurality of attribute buttons 1251 to 1255 on the web page 1200 for classifying a plurality of similar product items according to a attribute of the product.

Each of the plurality of attribute buttons 1251 to 1255 may be a button for sorting a plurality of similar product items 1221, 1222, and 1223 according to the user's preferred product attribute or for recommending additional product items.

The first button 1251 may be a button for sorting a plurality of product items 1221, 1222, and 1223 or recommending additional product items depending on whether the product supports a knock-on function. For example, when the first button 1251 is selected, the artificial intelligence device 100 may prioritize product items supporting the knock-on function among the plurality of product items 1221, 1222, and 1223.

The second button 1252 may be a button for sorting the plurality of product items 1221, 1222, and 1223 according to a color of the product or for recommending additional product items. When the second button 1252 is selected, the artificial intelligence device 100 may display only product items of the same color as the product of the model code 1201 among the plurality of product items 1221, 1222, and 1223. The second button 1252 may be a color button representing a specific color.

The third button 1253 may be a button for sorting the plurality of product items 1221, 1222, and 1223 according to a price of the product or for recommending additional product items. When the third button 1253 is selected, the artificial intelligence device 100 may display product items with prices similar to those of the model code 1201 among the plurality of product items 1221, 1222, and 1223.

The fourth button 1254 may be a button for sorting the plurality of product items 1221, 1222, and 1223 according to a capacity of the product or for recommending additional product items. When the fourth button 1254 is selected, the artificial intelligence device 100 may display product items having the same capacity as the product of the model code 1201 among the plurality of product items 1221, 1222, and 1223.

The fifth button 1255 may be a button for sorting the plurality of product items 1221, 1222, and 1223 according to a ice purification function of the product or for recommending additional product items. When the fifth button 1255 is selected, the artificial intelligence device 100 may display only product items having the ice purification function among the plurality of product items 1221, 1222, and 1223.

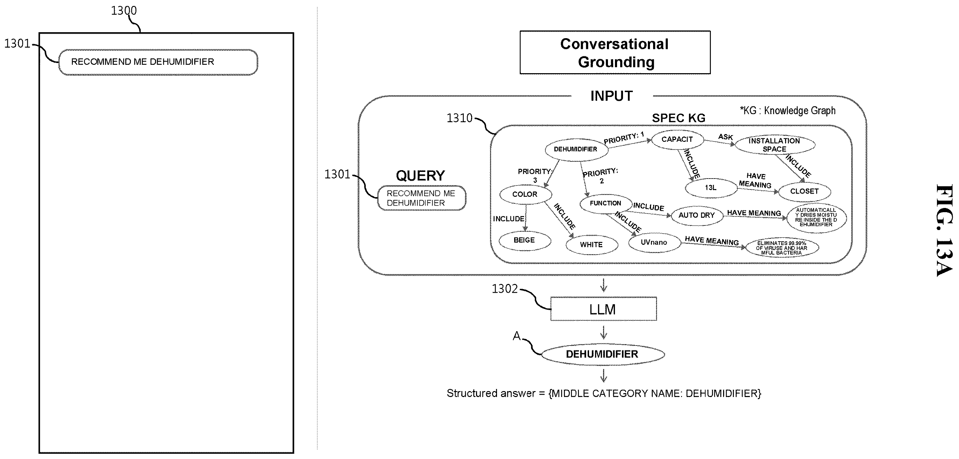

FIG. 13A to 13L are diagrams illustrating a process for providing an interactive commerce service for product search according to an embodiment of the present disclosure.

Hereinafter, it is assumed that the artificial intelligence server 200 receives a query from the artificial intelligence device 100, generates a response to the query, and transmits the generated response to the artificial intelligence device 100.

However, there is no need to be limited to this, and the memory 170 of the artificial intelligence device 100 may store a LLM 1302, and may directly generate a response to the user's query through the LLM 1302.

Referring to FIG. 13A, the artificial intelligence device 100 may display an execution screen 1300 of a chatbot application on the display 151. The artificial intelligence device 100 may receive a recommendation query 1301 requesting a recommendation for a dehumidifier through the execution screen 1300 of the chatbot application.

In one embodiment, the artificial intelligence device 100 may transmit the received recommendation query 1301 to the artificial intelligence server 200. The artificial intelligence server 200 may obtain the recommendation query 1301 and a knowledge graph 1310 corresponding to the dehumidifier included in the recommendation query 1301 as input to the LLM 1302. The knowledge graph may be referred to as a spec knowledge graph.

The LLM 1302 may be stored in the memory 230 of the artificial intelligence server 200.

The LLM 1302 may output a dehumidifier node (A) from the recommendation query 1301 and the knowledge graph 1310.

The artificial intelligence server 200 may record the dehumidifier in a structured answer.

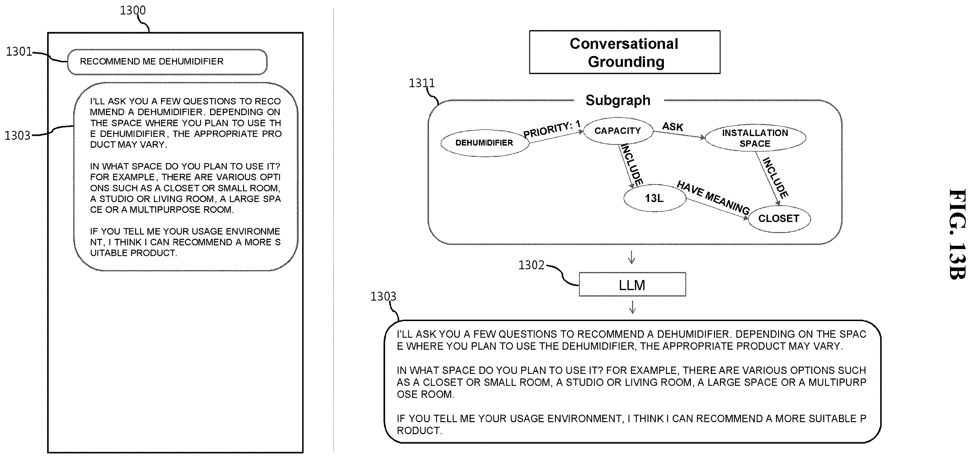

The artificial intelligence server 200 may check a priority of the dehumidifier based on the knowledge graph 1310. As shown in FIG. 13B, the artificial intelligence server 200 may extract a first sub-graph 1311 corresponding to <capacity> of a first priority.

The artificial intelligence server 200 may input the extracted first subgraph 1311 into the LLM 1302 to generate a question response 1303 inquiring about an installation space of the dehumidifier related to the capacity of the dehumidifier. The generated question response 1303 may be transmitted to the artificial intelligence device 100 and displayed on the execution screen 1300 of the chatbot application.

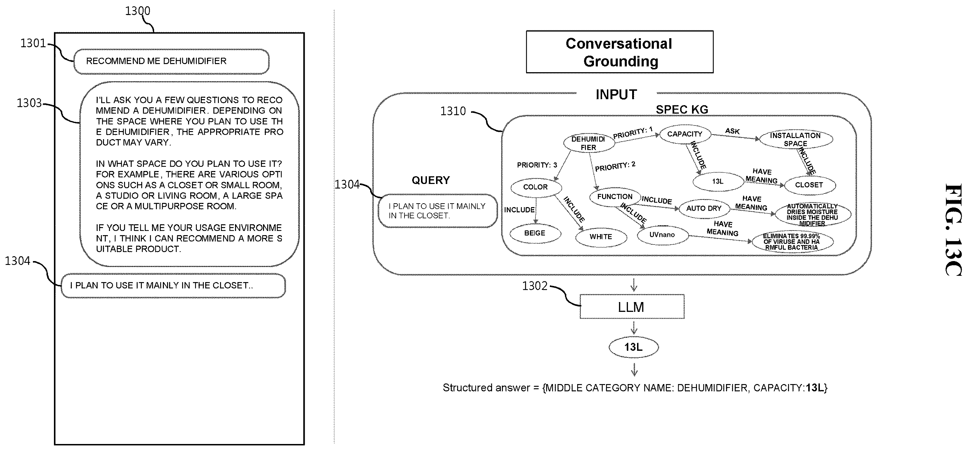

As shown in FIG. 13C, the artificial intelligence device 100 may receive an installation space query 1304 indicating the installation space (clothes room) of the dehumidifier following the question response 1303, and transmit the received installation space query 1304 to the artificial intelligence server 200.

The artificial intelligence server 200 may extract the capacity (13L) of the dehumidifier from the installation space query 1304 and the knowledge graph 1310 through the LLM 1302.

The artificial intelligence server 200 may, additionally, record the capacity (13L) in the structured answer.

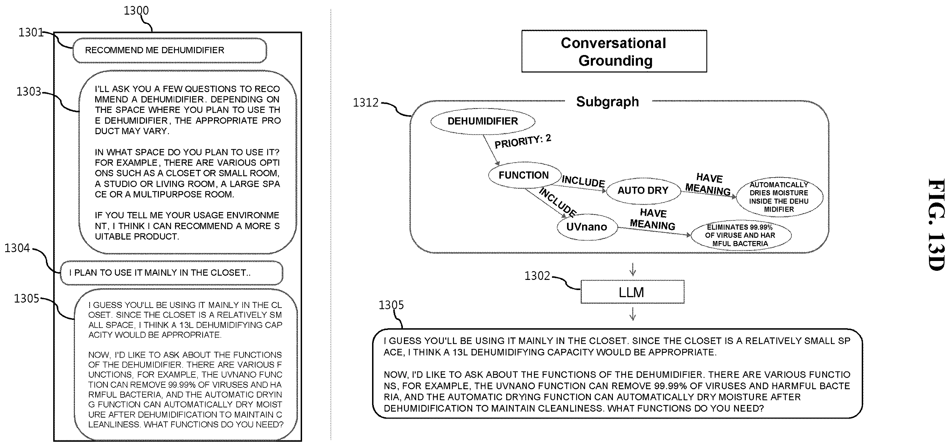

Afterwards, the artificial intelligence server 200 may input a second sub-graph 1312 corresponding to the function of a second priority into the LLM 1302, as shown in FIG. 13D, to generate a question response 1305 that inquires about the function of the dehumidifier. The generated question response 1305 may be transmitted to the artificial intelligence device 100 and displayed on the execution screen 1300 of the chatbot application. The question response 1305 may include an answer to the installation space query 1304.

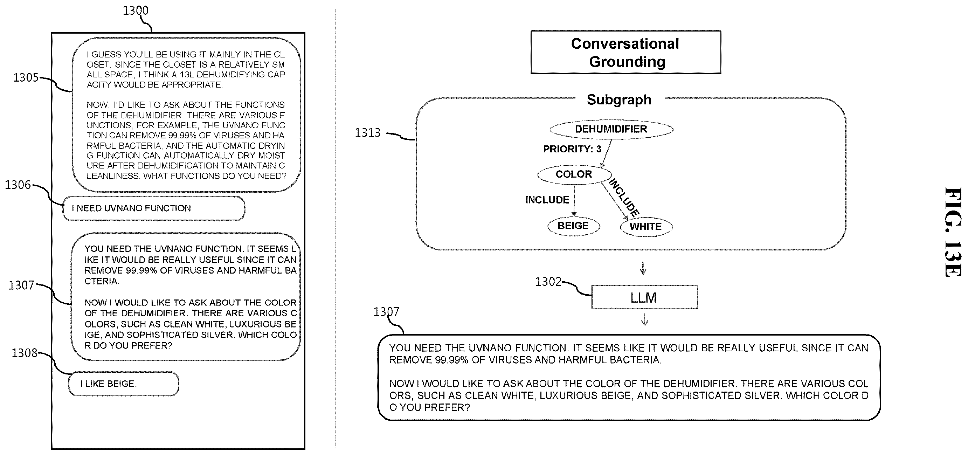

As shown in FIG. 13E, the artificial intelligence device 100 may receive a function query 1306 requesting the function of the dehumidifier and transmit the received function query 1306 to the artificial intelligence server 200.

The artificial intelligence server 200 may extract the function (UVnano) of the dehumidifier from the function query 1306 and the knowledge graph 1310 through the LLM 1302.

The artificial intelligence server 200 may additionally record the function (UVnano) in the structured answer.

Afterwards, as shown in FIG. 13E, the artificial intelligence server 200 may input a third sub-graph 1313 corresponding to a third priority function into the LLM 1302 to generate a question response 1307 that inquires about a color of the dehumidifier. The generated question response 1307 may be transmitted to the artificial intelligence device 100 and displayed on the execution screen 1300 of the chatbot application. The question response 1307 may include an answer to request function query 1306.

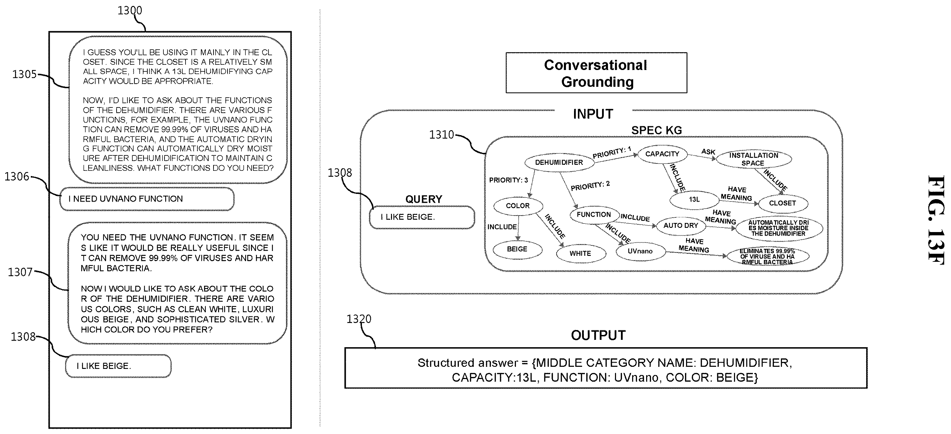

As shown in FIG. 13F, the artificial intelligence device 100 may receive a color query 1308 indicating a beige color and transmit the received color query 1308 to the artificial intelligence server 200. The artificial intelligence server 200 may additionally record color (beige) in the structured answer.

The artificial intelligence server 200 may finally obtain the structured answer 1320 of {Category name: Dehumidifier, Capacity: 13L, Function: UVnano, Color: Beige}.

The artificial intelligence server 200 may extract similar products based on the structured answer 1320.

The artificial intelligence server 200 may generate the knowledge graph based on the structured answer 1320. The artificial intelligence server 200 may obtain a plurality of product model codes using the knowledge graph generated from the knowledge graph embedding model 1130 according to the embodiment of FIG. 11. A detailed description of this will be replaced with the description of FIG. 11.

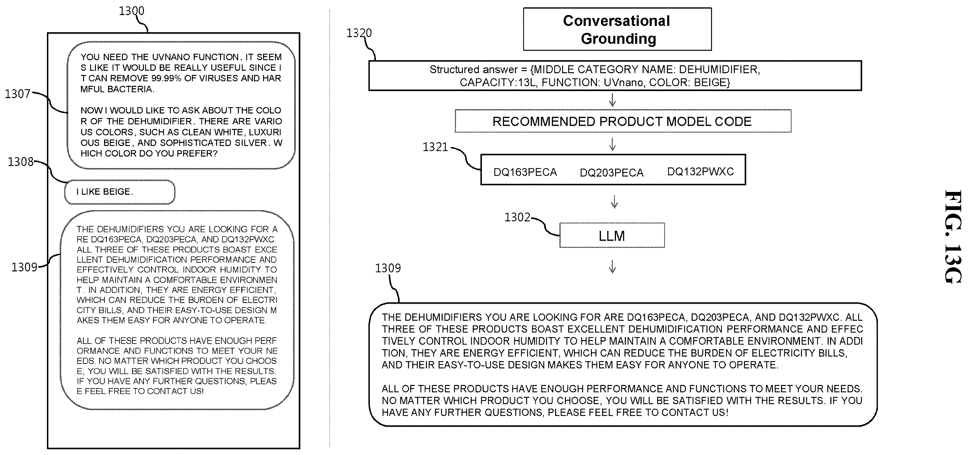

The difference from the embodiment of FIG. 11 is that in the embodiment of FIG. 11, a knowledge graph is created based on the model code 1110 directly input by the user, and in the embodiment of FIG. 13g, a knowledge graph is created based on the structured answer 1320 that combines properties obtained from queries of the user without receiving a model code.

The artificial intelligence server 200 may obtain product model codes 1321 corresponding to products having attributes similar to attributes of the structured answer 1320.

The artificial intelligence server 200 may generate a product recommendation response 1309 from the product model codes 1321 through the LLM 1302 and transmit the product recommendation response 1309 to the artificial intelligence device 100. As shown in FIG. 13g, the artificial intelligence device 100 may display a product recommendation response 1309 on the execution screen 1300 of the chatbot application.

The product recommendation response 1309 may include product model codes and a description of the product model codes.

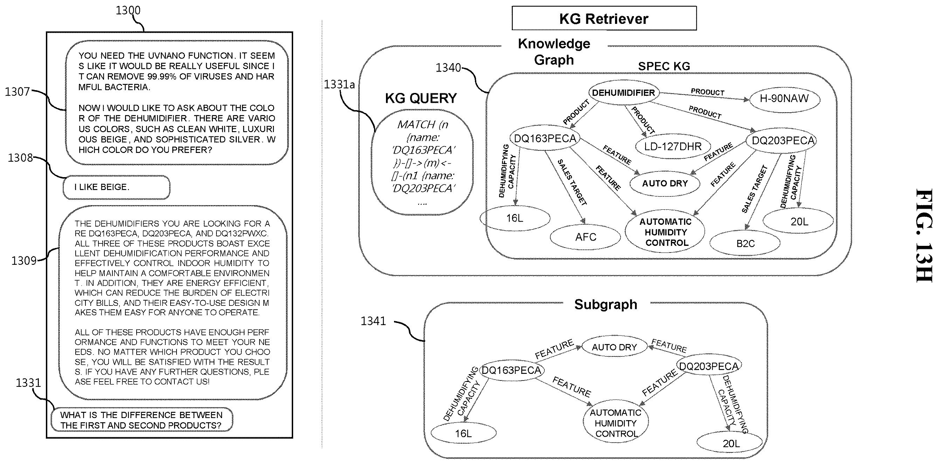

As shown in FIG. 13H, the artificial intelligence device 100 may receive a comparison query 1331 requesting differences between products corresponding to two product model codes included in the product recommendation response 1309, and transmit the comparison query 1331 to the artificial intelligence server 200.

The artificial intelligence server 200 may generate a knowledge graph-specific comparison query 1331a for comparing two products based on the received comparison query 1331.

The artificial intelligence server 200 may extract a subgraph 1341 that describes the relationship between two products from the knowledge graph 1340 that represents the relationship between product model codes 1321.

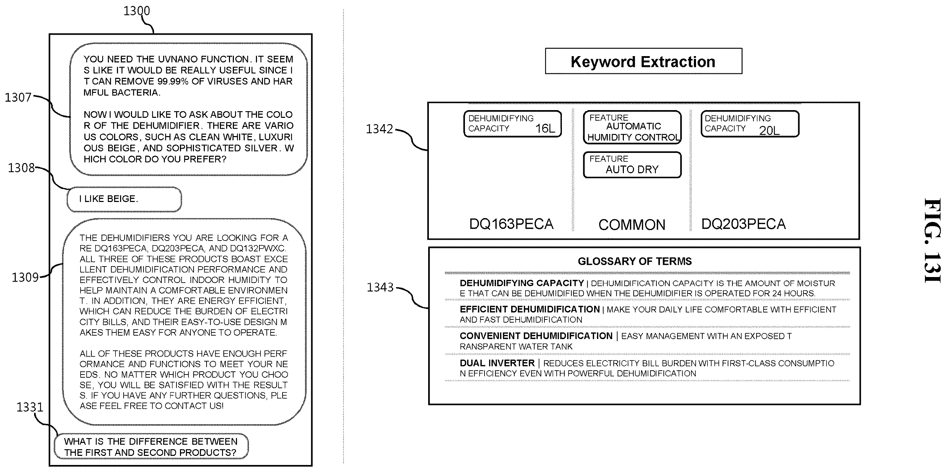

The artificial intelligence server 200 may extract commonalities and differences from two nodes corresponding to two products from the sub-graph 1341, and based on the extraction results, as shown in FIG. 13I, generate a comparison table 1342 including the commonalities and differences between the two products. Each commonality and difference may be expressed as a keyword representing the product's feature, and each feature may be assigned a priority in advance.

The artificial intelligence server 200 may generate an input sentence 1344 that describes the similarities and differences between the two products based on the keyword, the priority of the keyword, and a terminology dictionary 1343 that describes the keyword.

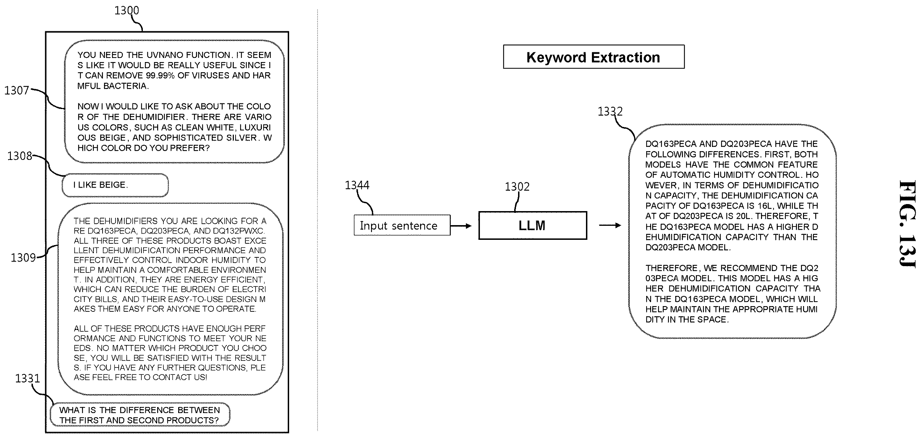

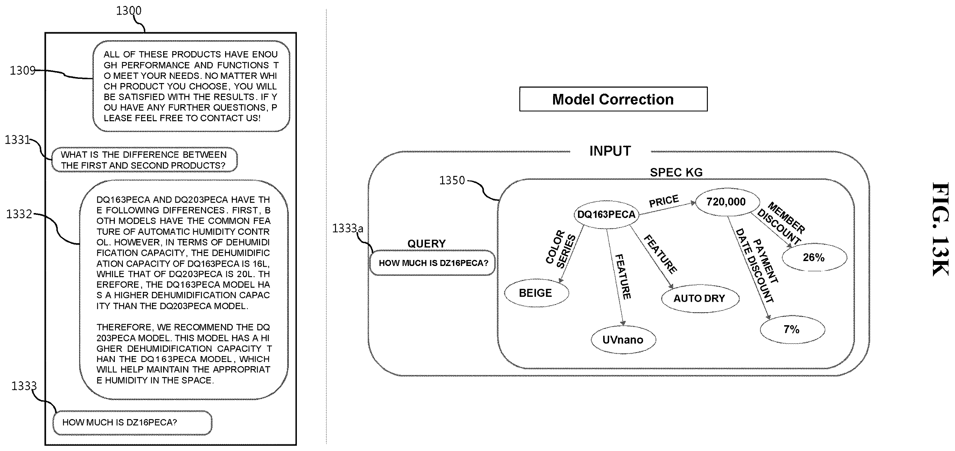

As shown in FIG. 13J, the artificial intelligence server 200 may generate a product comparison response 1352 from the input sentence 1344 through the LLM 1302. The artificial intelligence server 200 may transmit a product comparison response 1332 to the artificial intelligence device 100, and the artificial intelligence device 100 may display the product comparison response 1332 on the screen 1300, as shown in FIG. 13K.

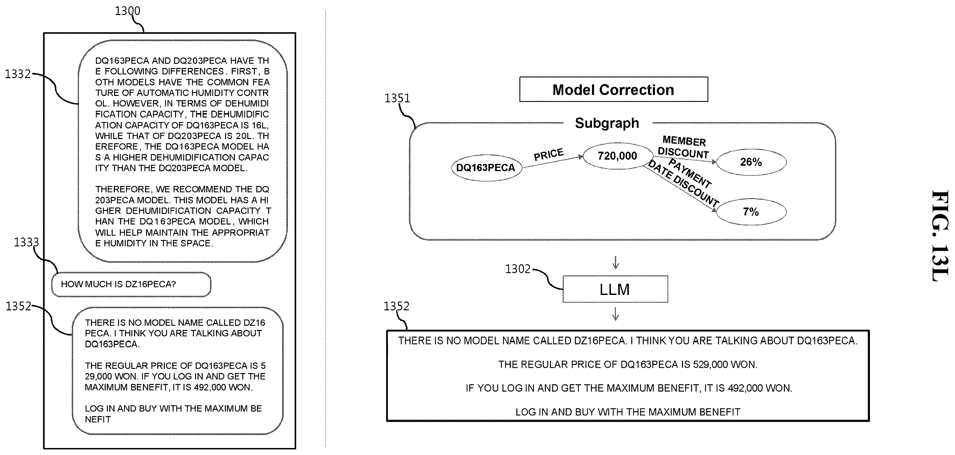

As shown in FIG. 13L, the artificial intelligence device 100 may receive a price query 1333 inquiring about the price of a product corresponding to the model code <DZ16PECA>, and transmit the received price query 1333 to the artificial intelligence server 200.

If the model code included in the received price query 1333 is not stored, the artificial intelligence server 200 may obtain a product model code similar to the model code. In this regard, the embodiment of FIGS. 5 and 6 may be applied, in which a product model code similar to the input model code is obtained based on the similarity of the model code.

The artificial intelligence server 200 may extract a product corresponding to a product model code (DQ163PECA) similar to the model code included in the price query 1333, and generate a price response 1352 based on product information of the extracted product. The artificial intelligence server 200 may generate the price response 1352 by inputting the knowledge graph 1351 based on the attributes of the product model code (DQ163PECA) into the LLM 1302.

The artificial intelligence server 200 may transmit the price response 1352 to the artificial intelligence device 100, and the artificial intelligence device 100 may display the received price response 1352 on the execution screen 1300 of the chatbot application.

As such, according to an embodiment of the present disclosure, a user may easily search for a product that matches the user's preference through an interactive commerce service, and a product as similar as possible may be recommended even if the model code of the product is entered incorrectly.

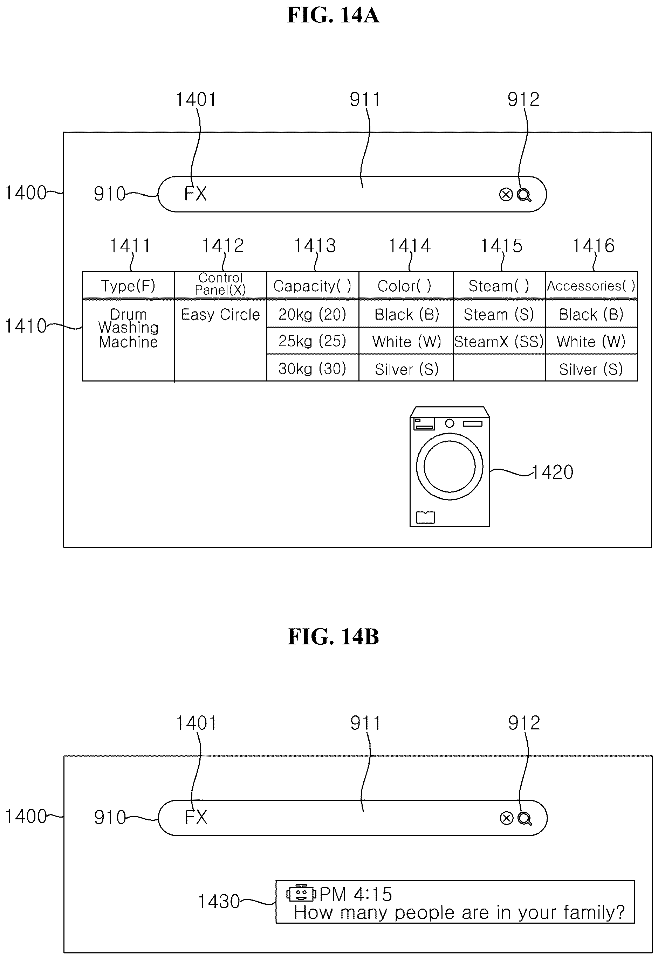

FIGS. 14A and 14B are diagrams illustrating a process for determining detailed items of a product when only part of a model code is entered into a search window according to an embodiment of the present disclosure.

Referring to FIG. 14A, the artificial intelligence device 100 may display a web page 1400 including the search window 910 on the display 151.

The artificial intelligence device 100 may only receive a partial code 1401 of the model code <FX> in the search window 910. Each character or each string constituting the model code may represent a detailed item of the product, and the detailed item corresponding to each letter or each string may be stored in advance in the memory 170. For example, F may represent the type of product, and X may represent the control panel.

When a partial code 1401 of the model code <FX> is entered into the search window 910, the artificial intelligence device 100 may recognize the partial code 1401 of the model code and display a tag list 1410.

The tag list 1410 may include a plurality of detailed items 1411 to 1416 for determining detailed items of a product corresponding to the partial code 1401 of the input model code.

The character corresponding to the first detailed item 1411 is F, and the character corresponding to the second detailed item 1412 is X. The artificial intelligence device 100 may generate a model code as <FX20> according to the input of selecting a capacity of 20Kg for the third detailed item 1413, and reflect <FX20> in the search window 910. The artificial intelligence device 100 may display a code corresponding to the selected value by linking the code with the partial code 1401 according to the input for selecting the value of each detailed item.

The artificial intelligence device 100 may determine a model code based on selection input for the fourth to sixth detailed items 1413 to 1416.

The artificial intelligence device 100 may display a product image 1420 according to the selection of the detailed item on one side of the tag list 1410. The product image 1420 may be changed to an image that reflects the content of the selected detailed item according to the selection of the detailed item.

Meanwhile, the artificial intelligence device 100 may automatically run the chatbot application if the search button 912 is not selected for a certain period of time after displaying the tag list 1410.

As such, according to an embodiment of the present disclosure, a user may easily search for a product reflecting desired attributes through the tag list 1410 and the product image 1420 even if he or she enters only part of the model code.

Referring to FIG. 14B, the artificial intelligence device 100 may determine the type of product as a drum washing machine with an Easy Circle function based on the partial code 1401 of the model code.

The artificial intelligence device 100 may run the chatbot application to guide the selection of detailed item of the drum washing machine and display an execution screen 1430 of the chatbot application. The execution screen 1430 of the chatbot application may include a question to determine the capacity of the drum washing machine.

The user may search for desired product through responses to the question.

As such, according to an embodiment of the present disclosure, a user may easily search for products reflecting desired attributes through a chatbot application even if he or she inputs only part of the model code.

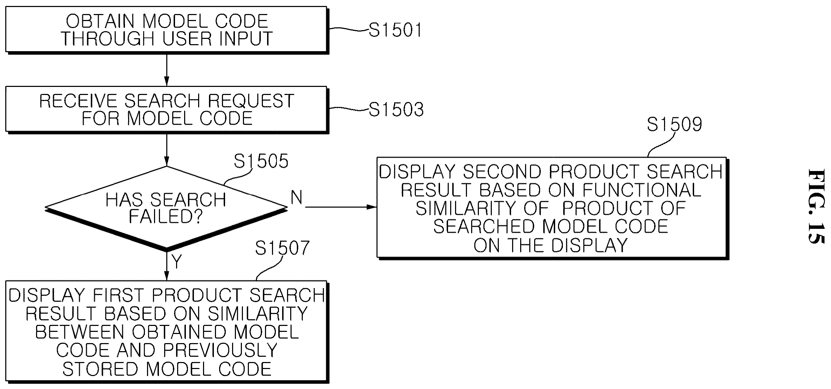

FIG. 15 is a diagram for explaining a method of operating an artificial intelligence device according to an embodiment of the present disclosure.

The processor 180 of the artificial intelligence device 100 may obtain a model code through user input (S1501).

The description of step S1501 is replaced with the related description of step S301 in FIG. 3.

The processor 180 may receive a search request for the obtained model code (S1503).

The processor 180 may obtain a user input of selecting a search button placed on one side of a search word input window included on a web page as the search request.

As another example, the processor 180 may obtain the search request through a user's voice command.

The processor 180 may perform a search according to the received search request and determine whether the search for the model code has failed (S1505).

The processor 180 may perform the operation of the processor 260 of the AI server 200 performed in step S305 of FIG. 3. For this purpose, the memory 170 may store a plurality of product model codes.

If the obtained model code is not stored in the memory 170, the processor 180 may determine that the search for the model code has failed, and if the acquired model code is stored in the memory 170, the processor 180 may determine that the search for the model code has succeeded.

If it is determined that the search for the acquired model code has failed, the processor 180 may display the first product search result based on the similarity between the obtained model code and the previously stored model code on the display 151 (S1507).

If it is determined that the search for the obtained model code has failed, the processor 180 may extract one or more model codes similar to the obtained model code from among the plurality of model codes, and obtain product information of one or more products identifying the one or more extracted model codes as the first product search result.

The processor 180 may perform the operation of the processor 260 in step S307 of FIG. 3 . To this end, the memory 170 may store a plurality of product model codes, a plurality of product embedding vectors matched to each of the plurality of product model codes, and a plurality of product information matched to each of the plurality of product model codes.

If the processor 180 determines that the search of the obtained model code is successful, the processor 180 may display a second product search result based on a functional similarity of the product of the searched model code on the display 151 (S1509).

The processor 180 may perform the operation of the processor 260 in step S313 of FIG. 3 . For this purpose, the memory 170 may store a knowledge graph and a knowledge graph embedding model for the product.

An artificial intelligence device 100 according to an embodiment of the present disclosure may comprise a display 151; and at least one processor 180 configured to: receive a model code identifying a product through a user input, if a search for the model code fails, obtain a first product search result based on a similarity between the model code and a pre-stored product model code, and display the obtained first product search result on the display.

The first product search result may include a plurality of product items, displayed on a first area, and the at least one processor may, if one of the plurality of product items is selected, display a search classification result rearranged based on a category or an attribute of the selected product item on a second area.

The first product search result includes a plurality of product items, and the plurality of product items may be displayed on distinct areas according to an attribute.

The at least one processor 180 may, if the search for the model code is successful, display a second product search result based on a functional similarity of the product corresponding to the model code on the display 151.

The second product search result may include a basic product search result for products matching the model code where the search was successful, and a similar product search result for one or more similar products corresponding to one or more product model codes similar to the model code for which the search was successful.

The similar product search results may include function summary information to explain the differences between functions of the product matching the model code and functions of the one or more similar products.

The similar product search results includes a plurality of similar product items, and

The at least one processor 180 may display a plurality of attribute buttons on the display for classifying the plurality of similar product items according to an attribute of a product.

The at least one processor 180 may if a partial code of the model code is entered, display a tag list including detailed items of the product identified based on the partial code on the display, and display a code corresponding to the selected value by linking the code with the parital code according to an input for selecting a value of each detailed item.

The at least one processor 180 may display a product image corresponding to the code reflected as the value of each detailed item is selected on the display.

The at least one processor may, if a partial code of the model code is entered and a type of product is confirmed based on the partial code, display an execution screen of a chatbot application on the display, and display an inquiry for determining detailed items of the product on the execution screen of the chatbot application.

The functionality of the elements disclosed in the present invention may be implemented using a circuit or a processing circuit including general purpose processor, a special purpose processor, an integrated circuit, an application specific integrated circuit (ASIC), an existing circuit, and/or combinations thereof. The processor may be defined as a processing circuit or circuitry that includes transistors and other circuits.

In the present invention, circuits, units, or means may be hardware designed or programmed to perform a specified function. The hardware may be hardware disclosed herein or other known hardware programmed or configured to perform the specified function. If the hardware is the processor, which may be considered a type of circuit, then the circuit, means or units are a combination of hardware and software, and software may make up the hardware and/or the processor.

The present disclosure described above may be implemented as computer-readable code on a program-recorded medium. Computer-readable non-transitory media includes all types of recording devices that store data that may be read by a computer system. Examples of computer-readable media include a hard disk drive (HDD), a solid state disk (SSD), a silicon disk drives (SDD), a ROMs, a RAM, a CD-ROM, a magnetic tape, a floppy disk, and a optical data storage device. Additionally, the computer may include the processor 180 of an artificial intelligence device.

## Claims

1. An artificial intelligence device (100), comprising:
a display (151); and
at least one processor (180) configured to:
receive a model code identifying a product through a user input,
chracterized in that the at least one processor (180) is further configured to:
if a search for the model code has been failed, obtain a first product search result based on a similarity between the model code and a pre-stored product model code, and
display the obtained first product search result on the display (151).

2. The artificial intelligence device of claim 1, wherein the first product search result includes a plurality of product items, displayed on a first area, and
wherein the at least one processor (180) is further configured to:
if one of the plurality of product items is selected, display a search classification result rearranged based on a category or an attribute of the selected product item on a second area.

3. The artificial intelligence device of any one of claims 1 to 2, wherein the first product search result includes a plurality of product items, and the plurality of product items are displayed on distinct areas according to an attribute.

4. The artificial intelligence device of any one of claims 1 to 3, wherein the at least one processor (180) is further configured to:
if the search for the model code is successful, display a second product search result based on a functional similarity of the product corresponding to the model code on the display.

5. The artificial intelligence device of claim 4, wherein the second product search result includes a basic product search result for products matching the model code where the search was successful, and a similar product search result for one or more similar products corresponding to one or more product model codes similar to the model code for which the search was successful.

6. The artificial intelligence device of claim 5, wherein the similar product search results includes function summary information to explain the differences between functions of the product matching the model code and functions of the one or more similar products.

7. The artificial intelligence device of any one of claim 4 to 6, wherein the similar product search results includes a plurality of similar product items, and
wherein the at least one processor (180) is further configured to:
display a plurality of attribute buttons on the display for classifying the plurality of similar product items according to an attribute of a product.

8. The artificial intelligence device of any one of claims 1 to 7, wherein the at least one processor (180) is further configured to:
if a partial code of the model code is entered, display a tag list including detailed items of the product identified based on the partial code on the display, and
display a code corresponding to the selected value by linking the code with the parital code according to an input for selecting a value of each detailed item.

9. The artificial intelligence device of claim 8, wherein the at least one processor (180) is further configured to:
display a product image corresponding to the code reflected as the value of each detailed item is selected on the display.

10. The artificial intelligence device of claim any one of claims 1 to 9, wherein the at least one processor (180) is further configured to:
if a partial code of the model code is entered and a type of product is confirmed based on the partial code, display an execution screen of a chatbot application on the display, and
display an inquiry for determining detailed items of the product on the execution screen of the chatbot application.

11. A method of operating an artificial intelligence device, comprising:
receiving a model code identifying a product through a user input;
**characterized in that** the method further comprises:
if a search for the model code has been failed, obtaining a first product search result based on a similarity between the model code and a pre-stored product model code; and
displaying the obtained first product search result.

12. The method of claim 11, wherein the first product search result includes a plurality of product items, displayed on a first area, and
wherein the method further comprises:
if one of the plurality of product items is selected, displaying a search classification result rearranged based on a category or an attribute of the selected product item on a second area.

13. The method of any one of claims 11 to 12, wherein the first product search result includes a plurality of product items, and the plurality of product items are displayed on distinct areas according to an attribute.

14. The method of any one of claims 11 to 13, wherein the method further comprises:
if the search for the model code is successful, displaying a second product search result based on a functional similarity of the product corresponding to the model code.

15. The method of claim 14, wherein the second product search result includes a basic product search result for products matching the model code where the search was successful, and a similar product search result for one or more similar products corresponding to one or more product model codes similar to the model code for which the search was successful.
